# EUROPEAN PATENT APPLICATION

(11) **EP 4 580 301 A1**
(43) Date of publication of application: **02.07.2025**
(21) Application number: 23857591.4
(22) Date of filing: 27.07.2023
(51) Int. Cl.: H04W 76/14, H04W 76/19, H04W 76/34, H04W 24/02

(54) **COMMUNICATION DEVICE FOR VEHICLE**

(30) Priority: 22.08.2022 KR 20220104651
(71) Applicant: LG INNOTEK CO. LTD, Gangseo-gu Seoul 07796 (KR)
(72) Inventor: YOO, Chang Hoon, Seoul 07796 (KR); BAE, Sung Jun, Seoul 07796 (KR); HAM, So Yeon, Seoul 07796 (KR)
(74) Representative: DREISS Patentanwälte PartG mbB
(86) International application number: PCT/KR2023/010928
(87) International publication number: WO 2024/043555

(57) **Abstract**

According to an embodiment, a communication device for a vehicle includes a first communication module; and a second communication module, wherein the first communication module or the second communication module is connected to a user terminal depending on signal strength of the first communication module or the second communication module.

## Description

### [Technical Field]

The disclosure relates to a communication device for a vehicle, a user terminal, and a communication method for a vehicle.

### [Background Art]

With development of wireless communications, services provided to a vehicle in real time have been evolving. In the future, services based on connection between a user terminal, such as a smartphone or the like personal wireless device, and a communication device for the vehicle are expected to increase.

Research to provide such services is being actively conducted, but there are various problems.

### [Disclosure]

### [Technical Problem]

### [Technical Solution]

According to an embodiment of the disclosure, a communication device for a vehicle includes: a first communication module; and a second communication module, wherein the first communication module or the second communication module is connected to a user terminal depending on signal strength of the first communication module or the second communication module.

According to an embodiment, the communication device may further include a signal strength collector configured to collect signal strength between the user terminal and the first communication module, or signal strength between the user terminal and the second communication module.

According to an embodiment, the communication device may further include a connection manager configured to compare signal strength between the user terminal and the first communication module with signal strength between the user terminal and the second communication module.

According to an embodiment, the connection manager may be configured to connect the user terminal with a communication module having stronger signal strength among the first communication module and the second communication module.

According to an embodiment, when the first communication module and the user terminal are being connected but the signal strength between the user terminal and the second communication module is stronger than the signal strength between the user terminal and the first communication module, the connection manager may be configured to disconnect the user terminal from the first communication module and connect the user terminal and the second communication module.

According to an embodiment of the disclosure, a user terminal includes a communication unit configured to connect with a communication module of a vehicle, wherein the communication device for the vehicle includes: a first communication module; and a second communication module, and the communication unit is connected to the first communication module or the second communication module depending on signal strength of the first communication module or the second communication module.

According to an embodiment, the communication module of the vehicle may further include a signal strength collector configured to collect signal strength between the user terminal and the first communication module, or signal strength between the user terminal and the second communication module.

According to an embodiment, the communication module of the vehicle may further include a connection manager configured to compare signal strength between the user terminal and the first communication module with signal strength between the user terminal and the second communication module.

According to an embodiment, the connection manager may transmit a connection request to the communication unit so that the user terminal can connect with a communication module having stronger signal strength among the first communication module and the second communication module.

According to an embodiment, when the first communication module and the user terminal are being connected but the signal strength between the user terminal and the second communication module is stronger than the signal strength between the user terminal and the first communication module, the connection manager may be configured to transmit a disconnection request to the communication unit to disconnect the user terminal from the first communication module and transmit a connection request to the communication unit to connect the user terminal and the second communication module.

According to an embodiment of the disclosure, a communication method for a vehicle includes: connecting a user terminal with a communication module of the vehicle depending on signal strength of the communication module, wherein the communication module of the vehicle includes: a first communication module; and a second communication module, and the connecting includes connecting the first communication module or the second communication module to a user terminal depending on the signal strength of the first communication module or the second communication module.

According to an embodiment, the communication method for the vehicle may further include collecting signal strength between the user terminal and the first communication module, or signal strength between the user terminal and the second communication module.

According to an embodiment, the communication method for the vehicle may further include comparing signal strength between the user terminal and the first communication module with signal strength between the user terminal and the second communication module.

According to an embodiment, the comparing may include connecting the user terminal with a communication module having stronger signal strength among the first communication module and the second communication module.

According to an embodiment, the comparing may include disconnecting the user terminal from the first communication module and connecting the user terminal and the second communication module when the first communication module and the user terminal are being connected but the signal strength between the user terminal and the second communication module is stronger than the signal strength between the user terminal and the first communication module.

### [Advantageous Effects]

### [Description of Drawings]

FIG. 1 is a block diagram of a communication device for a vehicle according to an embodiment.
FIG. 2 is a diagram showing a handover connection process of a communication device for a vehicle according to an embodiment.
FIG. 3 is a flowchart of a communication method for the vehicle according to an embodiment.
FIG. 4 is a diagram showing a handover reconnection procedure based on signal strength of a communication method for a vehicle according to an embodiment.
FIG. 5 is a diagram showing a communication device for a vehicle and a user terminal according to an embodiment.
FIG. 6 is a diagram showing the flow of a communication method for the vehicle according to an embodiment.
FIG. 7 is a block diagram of a user terminal according to one embodiment.

### [Mode for Invention]

The disclosure may be modified in various ways and have various embodiments, and thus specific embodiments will be illustrated by way of example in the accompanying drawings and described in detail. It should be understood, however, that the drawings and descriptions are not intended to limit the disclosure to the specific embodiments, but cover all modifications, equivalents, and alternatives that fall within the spirit and scope of the disclosure.

Although the terms "first," "second," etc. may be used herein to describe various elements, such elements should not be construed as limited by these terms. These terms are only used to distinguish one element from another. For example, a first element may be termed a second element, and the second element may also be termed the first element, without departing from the scope of the disclosure. The terms "and/or" may include combinations of a plurality of related described items or any of a plurality of related described items.

When an element is described as being "connected" or "coupled" to another element, it should be understood that the element may be directly connected or joined to another element but intervening elements may be present therebetween. However, when an element is described as being "directly connected" or "directly coupled" to another element, it should be understood that there are no intervening elements therebetween.

The terminology used herein is for the purpose of describing particular embodiments only and is not intended to limit the disclosure. As used herein, the singular forms are intended to include the plural forms as well, unless the context clearly indicates otherwise. It will be further understood that the terms "include" and/or "have" when used herein specify the presence of stated features, numbers, steps, operations, elements, parts, and/or combinations thereof, but do not preclude the presence or addition of one or more other features, numbers, steps, operations, elements, parts, and/or combinations thereof.

Unless otherwise defined, all terms including technical and scientific terms used herein have the same meaning as commonly understood by a person of ordinary skill in the art to which the disclosure pertains. It will be further understood that terms defined in commonly used dictionaries should be interpreted as having a meaning consistent with their meaning in the context of the related art and will not be interpreted in an idealized or overly formal sense unless explicitly defined herein.

Below, embodiments will be described in detail with reference to the accompanying drawings, in which identical or corresponding elements will be given the same reference numerals throughout, and repetitive descriptions thereof will be avoided.

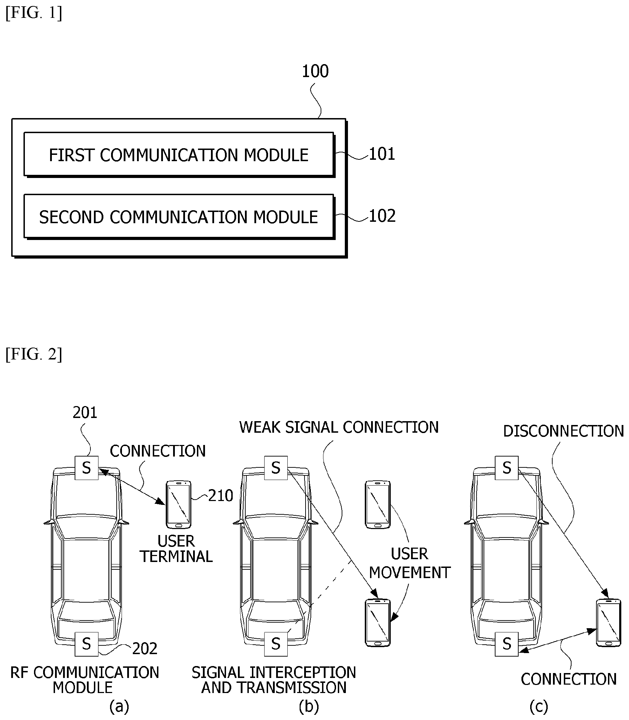

FIG. 1 is a block diagram of a communication device for a vehicle according to an embodiment.

According to an embodiment, a communication device 100 for a vehicle may include a first communication module 101, and a second communication module 102. The communication device 100 for the vehicle may include a plurality of communication modules including the first communication module 101 and the second communication module 102, and the plurality of communication modules may further include a third communication module, a fourth communication module, an nth communication module (where, n is a natural number of 2 or more), etc. Operations (to be described later) applicable to the second communication module 102 may also be applicable to the third communication module, the fourth communication module, the n^{th} communication module (where, n is a natural number of 2 or more), etc. The plurality of communication modules may include at least some of various communication devices/communication modules.

The communication device 100 for the vehicle may include at least some of the vehicle, a control device mounted to the vehicle, a memory, a processor, a data transceiver, etc.

The first communication module 101 or the second communication module 102 may be connected to a user terminal according to signal strength of the first communication module 101 or the second communication module 102.

According to an embodiment, the communication device 100 for the vehicle may further include a signal strength collector (not shown) that collects signal strength between the user terminal and the first communication module 101, or signal strength between the user terminal and the second communication module 102.

According to an embodiment, the communication device 100 for the vehicle may further include a connection manager (not shown) that compares the signal strength between the user terminal and the first communication module 101 with the signal strength between the user terminal and the second communication module 102.

According to an embodiment, the connection manager may connect the user terminal with the communication module having stronger signal strength between the first communication module 101 and the second communication module 102.

According to an embodiment, when the first communication module 101 and the user terminal are being connected but the signal strength between the user terminal and the second communication module 102 is stronger than the signal strength between the user terminal and the first communication module 101, the connection manager may disconnect the user terminal from the first communication module 101 and connect the user terminal and the second communication module 102.

According to an embodiment, when the first communication module 101 and the user terminal are being connected and the signal strength between the user terminal and the second communication module 102 is weaker than or equal to the signal strength between the user terminal and the first communication module 101, the connection manager may maintain the connection between the user terminal and the first communication module 101.

FIG. 2 is a diagram showing a handover connection process of a communication device for a vehicle according to an embodiment.

The communication device for the vehicle may include a first communication module 201, and a second communication module 202.

Referring to (a) in FIG. 2, the communication device for the vehicle may be connected to a user terminal 210.

The communication device for the vehicle may employ a method of improving coverage and connectivity more smoothly, rather than deteriorating wireless communication reliability and performance by maintaining the existing connection in a weak electric field condition.

The communication device for the vehicle may connect the user terminal 210 with the second communication module 202 which exhibits a stronger electric field than the existing connected device, i.e., the first communication module 201, thereby increasing user convenience through secured operation time and improved performance in subsequent stages.

The communication device for the vehicle periodically identifies the signal strength between an unconnected device, i.e., the second communication module 202 and a user device, i.e., the user terminal 210, and secures performance through identification and connection of a device having a stronger signal strength than the currently connected device, i.e., the first communication module 201.

Referring to (b) in FIG. 2, the communication device for the vehicle may transmit a parameter to an unconnected device, i.e., the second communication module 202 when connecting with the user terminal 210, and collect the signal strength between the user device and the second communication module 202.

Referring to (c) in FIG. 2, when there is a device, the signal strength of which is stronger than that of the existing connected device by a certain level (e.g., a preset threshold), among the unconnected devices, the communication device for the vehicle may disconnect the existing connection, thereby trying to connect with the device having the stronger signal strength or transmitting a request/setting to the user terminal 210.

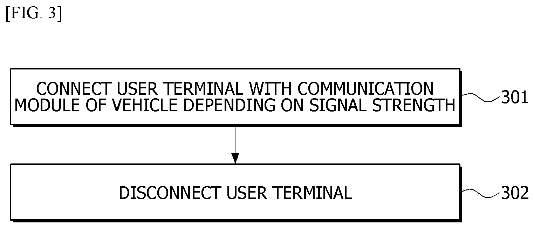

FIG. 3 is a flowchart of a communication method for the vehicle according to an embodiment.

According to an embodiment, each step of the communication method for the vehicle may be performed by at least some elements of the communication device for the vehicle.

In step 301, the communication device for the vehicle may connect with the user terminal according to the signal strength of the communication module of the vehicle. The communication module of the vehicle may include the first communication module and the second communication module.

The communication device for the vehicle may connect the user terminal with the first communication module or the second communication module according to the signal strength of the first communication module or the second communication module.

According to an embodiment, the communication device for the vehicle may collect the signal strength between the user terminal and the first communication module, or the signal strength between the user terminal and the second communication module.

According to an embodiment, the communication device for the vehicle may compare the signal strength between the user terminal and the first communication module with the signal strength between the user terminal and the second communication module.

According to an embodiment, the communication device for the vehicle may connect the user terminal with the communication module having stronger signal strength among the first communication module and the second communication module.

In step 302, the communication device for the vehicle may disconnect the user terminal from the first communication module and connect the user terminal and the second communication module when the first communication module and the user terminal are being connected but the signal strength between the user terminal and the second communication module is stronger than the signal strength between the user terminal and the first communication module.

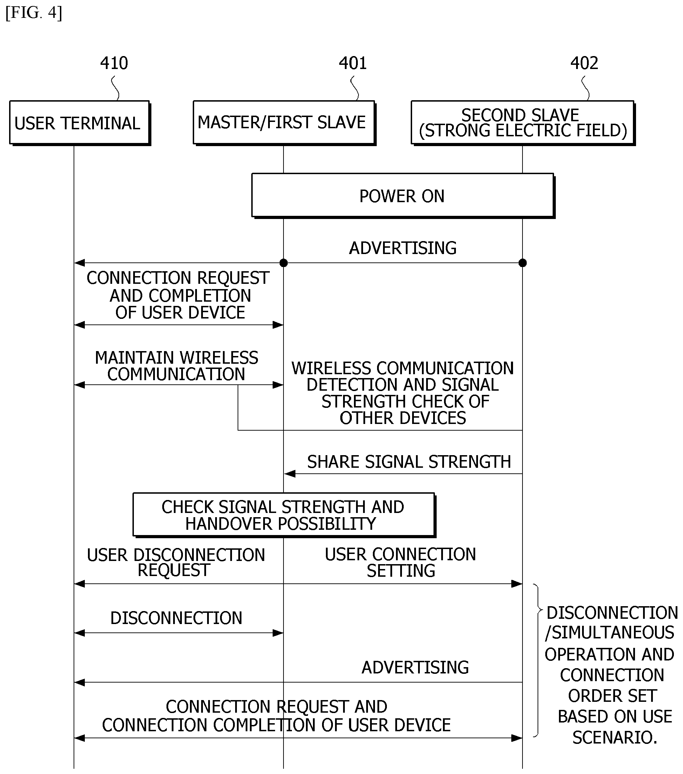

FIG. 4 is a diagram showing a handover reconnection procedure based on signal strength of a communication method for a vehicle according to an embodiment.

The communication device for the vehicle may include a master or first slave as a first communication module 401. The communication device for the vehicle may include a second slave (strong electric field) as a second communication module 402.

The communication device for the vehicle may turn on/supply power to the first communication module 401 and the second communication module 402. The communication device for the vehicle may perform advertising for a user terminal 410 through the first communication module 401 and the second communication module 402.

The communication device for the vehicle may transmit a connection request to a user device, i.e., the user terminal 410 through the first communication module 401, and receive a connection completion, etc. from the user terminal 410.

The communication device for the vehicle may maintain wireless communication between the first communication module 401 and the user terminal 410. The communication device for the vehicle may perform wireless communication detection and signal strength check for another device, i.e., the second communication module 402.

The communication device for the vehicle may check the signal strength and handover possibility. The communication device for the vehicle may set disconnection/simultaneous operation and connection order based on a use scenario.

The communication device for the vehicle may request the user terminal 410 to disconnect a user from the first communication module 401, and perform user connection setting for the second communication module 402.

The first communication module 401 and the user terminal 410 may be disconnected from each other. The communication device for the vehicle may use the second communication module 402 to perform the advertising for the user terminal 410.

The communication device for the vehicle may request a user device, i.e., the user terminal 410 to connect with the second communication module 402, and receive information about the connection completion from the user terminal 410.

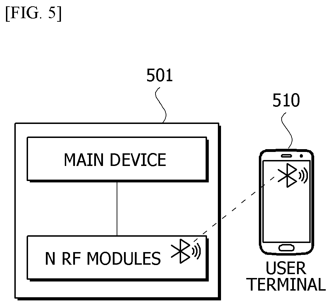

FIG. 5 is a diagram showing a communication device for a vehicle and a user terminal according to an embodiment.

A communication device 501 for the vehicle may include a main device such as an H/U, and N communication modules such as radio frequency (RF) modules (for example, N is a natural number of 2 or more). A user terminal 510 may be connected to at least one among the communication modules of the communication device 501 for the vehicle, and the user terminal 510 may also be newly connected to a communication module other than the connected communication module according to the signal strength.

When the signal strength between the communication module and the user terminal 510 is higher than or equal to a preset threshold and communication therebetween is in a smooth condition, the communication device 501 for the vehicle may maintain the wireless connection between the communication module and the user terminal 510.

When the signal strength between the communication module and the user terminal 510 is lower than the preset threshold or the communication therebetween is not in the smooth condition, the communication device 501 for the vehicle may release the wireless connection between the communication module and the user terminal 510 and establish/request wireless communication between another communication module and the user terminal 510.

The communication device 501 for the vehicle may improve communication stability between wireless devices. Further, the communication device 501 for the vehicle has an effect on shortening an operation processing time through smooth wireless communication data exchange.

The communication device 501 for the vehicle has an advantage of improving time sync performance with other wireless devices such as UWB.

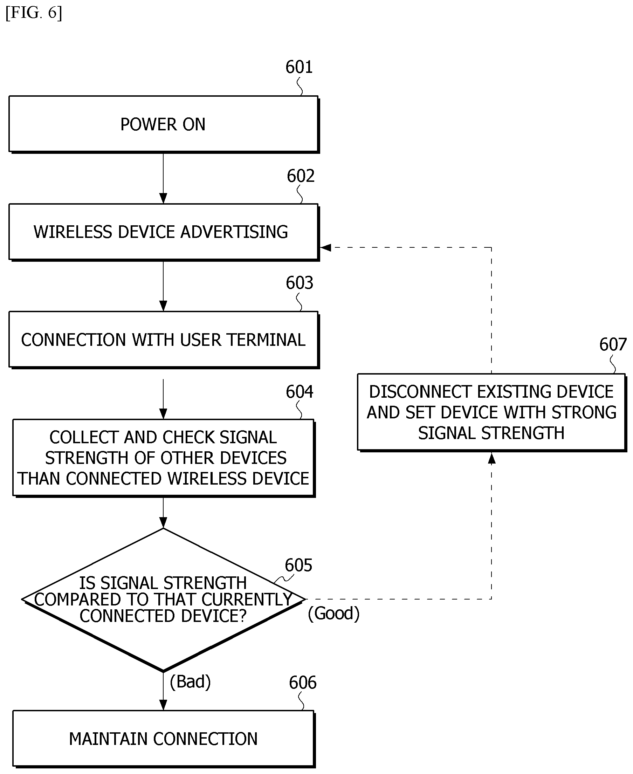

FIG. 6 is a diagram showing the flow of a communication method for the vehicle according to an embodiment.

In step 601, the communication device for the vehicle may be turn on/powered on by a user or the like.

In step 602, the communication device for the vehicle may perform wireless device advertising through a plurality of communication modules. The communication device for the vehicle may transmit a signal for connection with the communication module (e.g., RF module) after booting.

In step 603, the communication device for the vehicle may connect the user terminal with one among the plurality of communication modules.

In step 604, the communication device for the vehicle may collect and check the signal strength between the user terminal and the communication modules other than the connected wireless device (communication module).

In step 605, the communication device for the vehicle may perform comparison in signal strength between the currently connected device (communication module) and unconnected devices (other communication modules).

In step 606, the communication device for the vehicle may maintain the connection when the signal strength of the unconnected devices (other communication modules) is weaker than the signal strength of the currently connected device (communication module).

In step 607, the communication device for the vehicle may release the connection and connect the user terminal with the signal strength of the unconnected device (another communication modules) when the signal strength of the unconnected devices (other communication modules) is good compared to the signal strength of the currently connected device (communication module). The communication device for the vehicle may perform disconnection and then perform new connection, or may perform new connection and then perform the disconnection, based on scenarios.

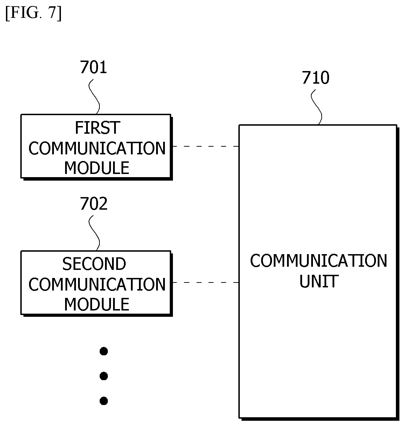

FIG. 7 is a block diagram of a user terminal according to one embodiment.

According to an embodiment, the user terminal may include a communication unit 710 for connection with a communication module of a vehicle.

The user terminal may include at least some of devices used by a user while using the vehicle, such as a smartphone, a mobile phone, and a tablet PC.

The communication module of the vehicle may include a first communication module 701 and a second communication module 702.

The communication unit 710 may be connected to the first communication module or the second communication module according to the signal strength of the first communication module or the second communication module.

According to an embodiment, the communication module of the vehicle may further include a signal strength collector that collects the signal strength between the user terminal and the first communication module, or the signal strength between the user terminal and the second communication module.

According to an embodiment, the communication module of the vehicle may further include a connection manager that compares the signal strength between the user terminal and the first communication module with the signal strength between the user terminal and the second communication module.

According to an embodiment, the connection manager may transmit a connection request to the communication unit 710 to connect the user terminal with the communication module having stronger signal strength among the first communication module and the second communication module.

According to an embodiment, when the first communication module and the user terminal are being connected but the signal strength between the user terminal and the second communication module is stronger than the signal strength between the user terminal and the first communication module, the connection manager may transmit a disconnection request to the communication unit 710 to disconnect the user terminal from the first communication module, and transmit a connection request to the communication unit 710 to connect the user terminal and the second communication module.

Although embodiments have been described, these are merely examples and do not limit the disclosure and various modifications and applications can be made by a person having ordinary knowledge in the art to which the disclosure pertains, without departing from the scope of the disclosure. For example, the elements shown in the embodiments may be modified and implemented. Further, differences related to the modifications and applications should be construed as being included in the scope of the disclosure defined in the appended claims.

## Claims

1. A communication device for a vehicle, comprising:
a first communication module; and
a second communication module, wherein
the first communication module or the second communication module is connected to a user terminal depending on signal strength of the first communication module or the second communication module.

2. The communication device of claim 1, further comprising a signal strength collector configured to collect signal strength between the user terminal and the first communication module, or signal strength between the user terminal and the second communication module.

3. The communication device of claim 2, further comprising a connection manager configured to compare signal strength between the user terminal and the first communication module with signal strength between the user terminal and the second communication module.

4. The communication device of claim 3, wherein the connection manager is configured to connect the user terminal with a communication module having stronger signal strength among the first communication module and the second communication module.

5. The communication device of claim 3, wherein, when the first communication module and the user terminal are being connected but the signal strength between the user terminal and the second communication module is stronger than the signal strength between the user terminal and the first communication module, the connection manager is configured to disconnect the user terminal from the first communication module and connect the user terminal and the second communication module.

6. A communication method for a vehicle, comprising:
connecting a user terminal with a communication module of the vehicle depending on signal strength of the communication module, wherein
the communication module of the vehicle comprises:
a first communication module; and
a second communication module,
the connecting comprises
connecting the first communication module or the second communication module to a user terminal depending on the signal strength of the first communication module or the second communication module.

7. The communication method of claim 6, further comprising collecting signal strength between the user terminal and the first communication module, or signal strength between the user terminal and the second communication module.

8. The communication method of claim 6, further comprising comparing signal strength between the user terminal and the first communication module with signal strength between the user terminal and the second communication module.

9. The communication method of claim 8, wherein the comparing comprises connecting the user terminal with a communication module having stronger signal strength among the first communication module and the second communication module.

10. The communication method of claim 8, wherein the comparing comprises disconnecting the user terminal from the first communication module and connecting the user terminal and the second communication module when the first communication module and the user terminal are being connected but the signal strength between the user terminal and the second communication module is stronger than the signal strength between the user terminal and the first communication module.
